# EUROPEAN PATENT APPLICATION

(11) **EP 3 339 844 A1**
(43) Date of publication of application: **27.06.2018**
(21) Application number: 16205769.9
(22) Date of filing: 21.12.2016
(51) Int. Cl.: G01N 22/00

(54) **DEVICE FOR DETERMINING SUBSTANCE PARAMETERS BY MEANS OF ELECTROMAGNETIC WAVES**

(71) Applicant: DSE Test Solutions A/S, 8700 Horsens (DK)
(72) Inventor: RASMUSSEN, Henrik Birch, 7130 Juelsminde (DK); JOHANNSEN, Ib, 8240 Risskov (DK)
(74) Representative: Patentgruppen A/S

(57) **Abstract**

A device (1) for determining at least one substance parameter of a substance (22) flowing in a pipeline, wherein the device comprises electromagnetic wave transmitting means and receiving means for transmitting and receiving, respectively, electromagnetic waves through the substance. The device (1) comprises an outer metal chamber (4), which is lined at least partly with an interior layer of electromagnetic wave absorber material (8), and an inner transfer pipeline element (10) configured with at least two opposed wall segments (12) that are essentially parallel with each other. The electromagnetic wave transmitting means and receiving means comprises two antennas (14), preferably circular polarized antennas, each positioned at a respective one of said at least two opposed wall segments (12), such that electromagnetic waves pass through the substance (22) flowing via said inner transfer pipeline element (10) in a planar way.

The invention further relates to a method of determining at least one substance parameter of a substance (22) flowing in a pipeline.

## Description

### Field of the invention

The invention relates to a device for determining substance parameters by means of electromagnetic waves.

In particular, the invention relates to a device type for determining specific parameter changes of a substance flowing in a pipeline that cause a change of amplitude or phase or both of an electromagnetic wave passing through the substance.

The device includes antennas and preferably high frequency circuitry that perform the measurements and preferably transfer the result via a data interface for remotely use.

### Background of the invention

Electromagnetic wave path measurements though a substance is a known method for determining specific material parameters such as water or dry matter content in a substance.

In this process, changes of specific material parameters in the substance cause a change of the amplitude or phase or both of an electromagnetic wave when passing through the substance.

An example of a prior art measuring device is disclosed by US 5,369,368, which relates to a device for determining the material parameters, in particular the water content, of a substance in a dielectric medium that is conducted through a pipeline. This prior art device includes a waveguide of a microwave system that at least partially encloses the pipeline. The object of this prior art concerns improvement of microwave measurements to make it possible to perform continuous in-line measurements of liquid media that are guided through a pipeline. Transmission or reflection of microwave radiation in the waveguide is evaluated continuously or in cycles, wherein the microwave radiation is in the GHz range. Furthermore, the transmission and/or reflection of the microwave radiation according to this prior art will be influenced by resonance effects and the evaluation will be depending on frequency of the microwave radiation.

An object of the present invention is, by applying electromagnetic wave radiation to a substance guided through a pipeline, to make possible continuously (in-line) measurements that determine the value of a specific parameter of the substance that affects the electromagnetic wave amplitude or phase or both passing through the substance.

Furthermore, an object of the present invention is to provide an improved measurement device which allows measurements to be made in a cost-efficient and reliable manner.

These and other objects are achievable by the invention as explained in further detail in the following.

### Summary of the invention

The invention relates to a device for determining at least one substance parameter of a substance, said substance flowing in a pipeline, wherein said device comprises electromagnetic wave transmitting means and receiving means for transmitting and receiving, respectively, electromagnetic waves through said substance, wherein said device comprises an outer metal chamber, which is lined at least partly with an interior layer of electromagnetic wave absorber material, and an inner transfer pipeline element configured with at least two opposed wall segments that are essentially parallel with each other, wherein said electromagnetic wave transmitting means and receiving means comprises two antennas, each positioned at a respective one of said at least two opposed wall segments, such that electromagnetic waves pass through said substance flowing via said inner transfer pipeline element in a planar way.

It is noted in this connection that one simple known experiment to illustrate that changes of specific material parameters in the substance cause a change of the amplitude or phase or both of an electromagnetic wave when passing through the substance, is to place one antenna on each side of e.g. a large and preferably slim sample cell of glass in a non-reflective environment. The sample cell is filled with water and the antennas are connected to a network analyzer - an instrument that can be used for measuring amplitude and phase of a high frequency signal. By applying dry matter, like dry extruded elephant grass, to the water a phase change can be observed. The same experiment can be performed with dry matter like hay with different moisture content observing the change of the amplitude. The basic principles of this method are used in the present invention. In the past this kind of measurements has typical been performed by applying waveguide transmission line technique to the pipeline. With this invention a chamber with antennas is applied to the pipeline.

The object of the invention includes utilizing an electromagnetic transmitting and receiving system for interacting with the substance via the antennas. The system performs measurement of the amplitude and/or phase changes of the electromagnetic wave passing through the substance and make the recorded measurement data be available through e.g. a data interface for remote use. In this way fully automated measurements of a specific parameter of a substance is possible for being a parameter of a larger automation or monitoring process.

According to the invention, the device comprises a metal chamber, which is lined inside at least partially with electromagnetic wave absorber material, where through the substance is lead in an e.g. rectangular pipeline that allow the electromagnetic wave to pass in a planar way through the substance between two preferably circular polarized antennas located in the chamber on each side of the pipeline.

Thus, by the invention it is achieved that the measurements of substance parameters by means of electromagnetic waves may be performed in an expedient manner not hitherto seen when dealing with substances being conducted via pipelines or the like and where it is achieved that the measurements can be made in a manner that is not depending on resonance effects or the like, but will in principle be non-dependent on frequency of the applied electromagnetic waves utilized.

According to a preferable embodiment, said antennas may be circular polarized antennas.

Hereby, the provision of a planar propagation electromagnetic wave configuration is furthermore facilitated.

According to an embodiment, said two antennas, each positioned at a respective one of said at least two opposed wall segments, may be positioned behind each one of said at least two opposed wall segments.

Hereby, the device can be configured in a straightforward manner. However, it is noted that the respective antennas possibly can be integrated with or even in the at least two opposed wall segments, if desired.

According to a preferable embodiment, a distance may be arranged between each of said two opposed wall segments and the respective antennas, said distance representing a matching parameter.

Hereby, it is achieved that this distance, which corresponds to a space, may serve as a matching parameter, e.g. in connection with an impedance matching of the antenna arrangement and thus in connection with e.g. optimization of the measuring arrangement in general.

According to an embodiment, said inner transfer pipeline element may be configured as an essentially rectangular pipeline element.

Hereby, the at least two opposed wall segments that are essentially parallel with each other can be arranged in a straightforward manner, using readily available components, i.e. as a rectangular pipeline that allows the electromagnetic wave to pass in a planar way through the substance between two preferably circular polarized antennas located in the chamber on each side of the pipeline. It is noted that a square pipeline can be used as a particular element. Further, it is a possibility that other pipeline forms can be used, as long as two opposed wall segments are included and that thus an upper and/or lower wall can deviate from a linear shape.

According to an embodiment, said inner transfer pipeline element may be configured with connection means, e.g. connection flanges or the like, at the ends for establishing connection to the pipeline.

Hereby, it is achieved that the measuring device according to the invention can be added into and/or integrated in a pipeline system in a straightforward manner, using readily available connection means.

According to an embodiment, said inner transfer pipeline element may be configured with an inner cross sectional area that essentially is the same as the inner cross sectional area of the pipeline.

Hereby, it is achieved that an efficient and/or suitable substance flow is facilitated, e.g. without for example turbulence or ripple effects that may prevent a homogeneous flow and which may possibly be more or less detrimental to the measurements.

According to an embodiment, said antennas, e.g. said circular polarized antennas may be patch antennas.

Hereby, the antennas for the measuring device may be provided as particularly suitable components, ensuring a compact construction as well as an electrically fulfilling construction. Other types of antennas and variations hereof may be used instead and it is for example a possibility that linear polarized antennas may be used.

According to an embodiment, said device may comprise high frequency transmitting circuitry and high frequency receiving circuitry connected to said antennas, e.g. said circular polarized antennas.

Such high frequency transmitting circuitry and high frequency receiving circuitry may for example be integrated with the measuring device, e.g. positioned in a measuring circuitry box or the like in the vicinity of the measuring chamber and the antennas, thus providing a compact configuration, which furthermore may be effective in the way of facilitating prevention of parasitic effects, e.g. cable phase change vs temperature, etc.

According to an embodiment, said device may comprise a processing system for providing determination of a specific material in the substance, based on change in amplitude and/or phase for the electromagnetic wave propagated through the substance from one of said two antennas, e.g. circular polarized antennas, to the other.

Based on e.g. calibration measurements, e.g. measurement of a liquid without dry matter content and with a known amount of dry matter content, changes of amplitude as well as changes of phase can be determined and used for subsequent measurements of such substances, e.g. water with a dry matter content which it is desired to determine. Depending on the substances involved, it can be determined whether amplitude, e.g. dampening of amplitude of the propagated electromagnetic waves or phase change preferably should be utilized, depending on which provides proper correlations, for example linear dependency. In case more than one type of dry matter or liquid is involved, amplitude as well as phase change of the propagated electromagnetic waves may be utilized, e.g. in order to determine e.g. a ratio between two types of dry matter and the total dry matter content. Other manners of using the device according to the invention will be possible as it will be apparent to a skilled person.

According to an embodiment, said device may be configured for transmitting and receiving by said electromagnetic wave transmitting means and receiving means, respectively, electromagnetic waves at frequencies above 100 MHz, in a preferred form in a frequency interval from 100 MHz to 50 GHz, in a more preferred form in a frequency interval from 300 MHz to 10 GHz and in another preferred form in a frequency interval from 300 MHz to 1 GHz.

Hereby, an increased versatility is achieved as regards the frequency range that may be used as compared to the prior art, where usually limited frequency ranges can be used, cf. e.g. the above mentioned prior art measuring device disclosed by US 5,369,368. According to embodiments of the invention, considerably lower frequency ranges may for example be used, which may facilitate a cost reducing and relatively uncomplicated measuring device to be provided, which furthermore may provide that cost efficient measurements can be made in a reliable manner.

The inner transfer pipeline element of the measuring device that comprises the two opposed wall segments, may be made of e.g. a non-conductive material such as a plastic material. In particular, a thermoplastic material such as PVDF (polyvinylidene difluoride), which is chemically inert and resistant to corrosion, etc. or a similar material having the desired properties may be used. Other materials are possible, e.g. even such materials as ceramic materials.

As regards the electromagnetic wave absorber material, which is a material that can inhibit the reflection of electromagnetic radiation /waves, in this instance by attenuating emission from the transmitting antenna in all other directions than the propagation direction perpendicular to the pipeline direction, and which thus serves in avoiding interfering reflections and in general is of importance in effecting the planar electromagnetic wave radiation within the inner transfer pipeline element between the at least two opposed wall segments with their respective antennas, it is noted that various materials and configurations may be used. For example, electromagnetic wave absorber materials in the form of lossy material that absorb energy of electromagnetic waves passing through it like e.g. carbon loaded foam, may be used. Other materials and configurations can be used and it is noted that the various materials and configurations may be e.g. selected in view of the specific circumstances, frequency ranges, etc.

According to a second aspect, the invention relates to a method of determining at least one substance parameter of a substance, said substance flowing in a pipeline, wherein said method comprises providing electromagnetic wave transmitting means and receiving means for transmitting and receiving, respectively, electromagnetic waves through said substance, characterized in that said method comprises
- providing a measurement device comprising an outer metal chamber, which is lined at least partly with an interior layer of electromagnetic wave absorber material, and an inner transfer pipeline element configured with at least two opposed wall segments that are essentially parallel with each other, wherein said electromagnetic wave transmitting means and receiving means comprises two antennas, each positioned at a respective one of said at least two opposed wall segments,
- propagating electromagnetic waves from said electromagnetic wave transmitting means to said electromagnetic wave receiving means passing through said substance in a planar way, and
- determining said at least one substance parameter based on change in amplitude and/or phase for the electromagnetic wave propagated through the substance.

According to an embodiment, said method may comprise the step of performing at least one initial calibration measurement.

According to an embodiment, said method may utilize a device according to any one of claims 1 to 11.

According to an embodiment, measurement data may be provided through e.g. a data interface for remote use, for example for an automation or monitoring process.

### The figures

The invention will be explained in further detail below with reference to the figures of which
- Fig. 1: shows an example of a device according to an embodiment of the invention in a perspective view,
- Fig. 2: shows the device of fig. 1, but cut in half to show the inner structure,
- Figs. 3a,b: show the device of fig. 1 in an exploded view to show fundamental components,
- Fig. 4: shows the device of fig. 1 seen from above,
- Fig. 5: is a sectional view of the device according to the exemplary embodiment along the line A-A as indicated in fig. 4,
- Fig. 6: is a sectional view of the device according to the exemplary embodiment along the line B-B as indicated in fig. 4,
- Fig. 7: is a typical measurement result showing the relation between the change of phase of the electromagnetic wave and the dry matter content of the substance,
- Figs 8a,b: is a further typical example, wherein measurements of change of phase as well as change of amplitude are shown and where the change of amplitude of the electromagnetic wave is relevant for determining the ratio between two types of dry matter and the total dry matter content of the mixture,
- Fig. 9: is a schematic illustration of an embodiment of a device according to the invention, wherein electronic measuring and processing components are indicated, and
- Figs. 10a,b: show sectional views of the device as shown in fig. 5, but with further modifications indicated of the walls of the measuring chamber.

### Detailed description

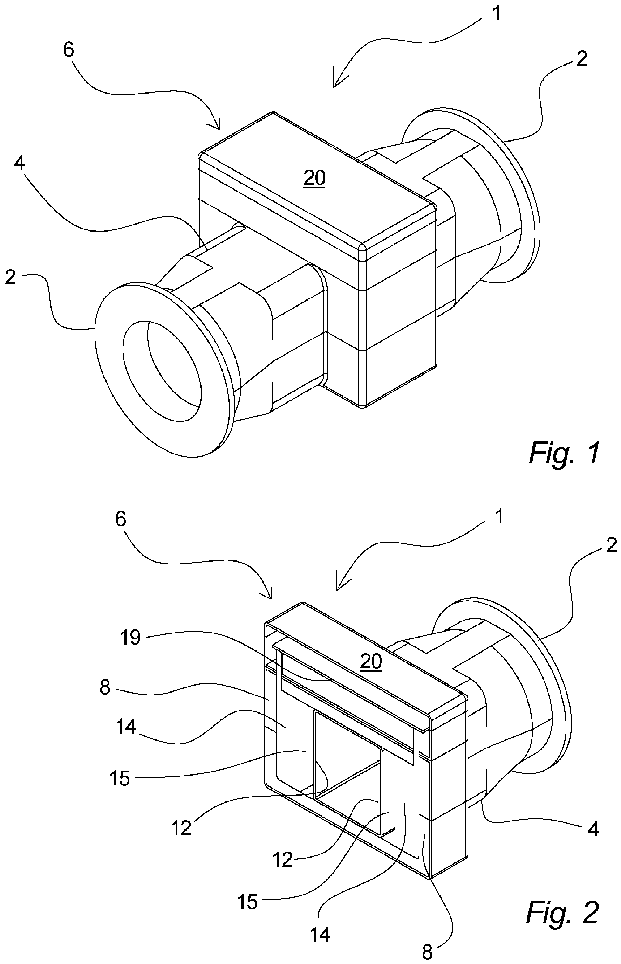

In fig. 1 an example of a device 1 according to an embodiment of the invention is shown in a perspective view, wherein it is seen that the device comprises an outer metal chamber 4, which at both ends is designed with means for connecting the device 1 in a pipeline system, e.g. with the device 1 being designed with connection flanges 2 or the like. Further, as shown in fig. 1, the device is designed with a measuring circuitry box 6 having e.g. a lid 20 in connection with an intermediate part comprising a measuring chamber, etc. as it will be explained in the following.

Fig. 2 shows the device 1 of fig. 1, but cut in half to show the inner structure, wherein it is shown that two opposed wall segments 12 are arranged in the interior of the device, arranged in planes that are parallel with each other. Behind each of these two opposed wall segments 12 an antenna 14, e.g. preferably a circular polarized antenna, is disposed, which preferably circular polarized antennas 14 preferably may be patch antennas. Furthermore, a distance 15 is arranged between each opposed wall segment 12 and each antenna 14. An interior layer of electromagnetic wave absorber material 8 is positioned inside the outer metal chamber 4 and substantially or at least partly surrounding the two preferably circular polarized antennas 14 and the opposed wall segments 12. Further, an electric circuit board 19 or the like is shown arranged in the measuring circuitry box 6 for e.g. supporting electric and electronic measuring equipment, including high frequency transmitting and receiving circuitry connected to the preferably circular polarized antennas and circuitry for computing and data communication with power supply and interfacing ports.

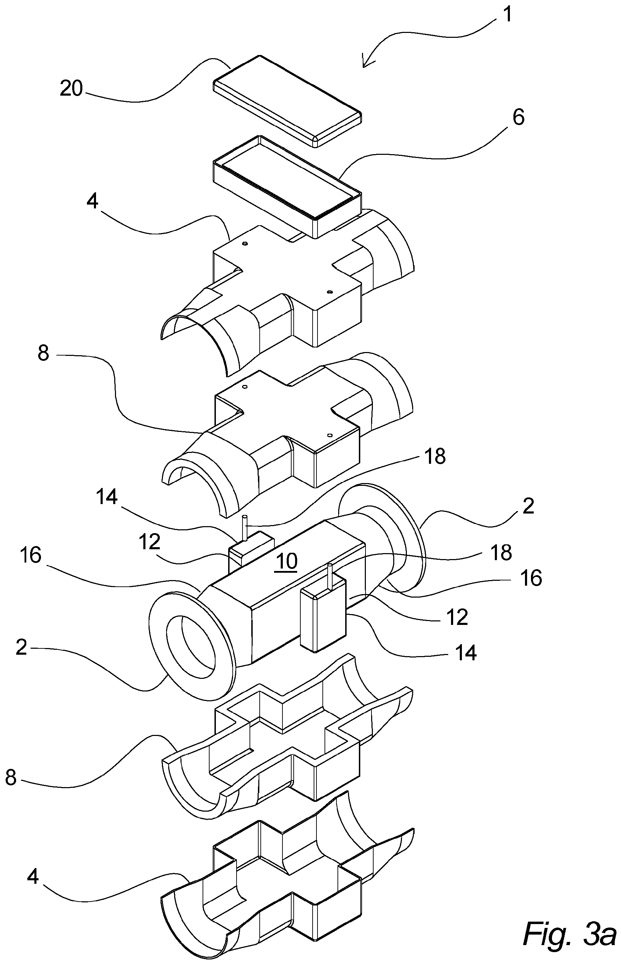

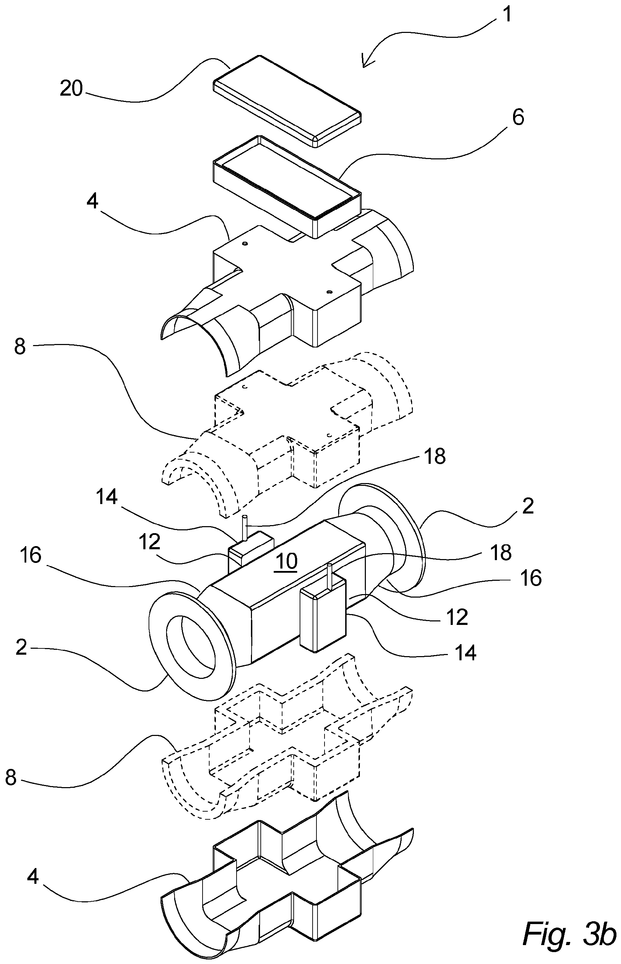

The structure of the device 1 will be further exemplified with reference to figs. 3a and 3b, which both show the device of fig. 1 in an exploded view to show main components of the device 1. Here, it is shown that the device comprises an inner transfer pipeline element 10, which at both ends via transition parts 16 terminates in the connection flanges 2. The inner transfer pipeline element 10 comprises the two opposed wall segments 12 and may be designed as a rectangular or square pipe, made of e.g. a plastic material, for example a thermoplastic material such as PVDF (polyvinylidene difluoride) or e.g. a ceramic material. On the outer side of each of the opposed wall segments 12 the preferably circular polarized antennas 14 are arranged, each with an electrical connection 18 that leads into the measuring circuitry box 6.

In the example shown in fig. 3a, the inner transfer pipeline element 10 is enclosed by the interior layer of electromagnetic wave absorber material 8, which is arranged as two shell-like halves that when assembled enclose the inner transfer pipeline element 10. On the outer side of the interior layer of electromagnetic wave absorber material 8 the outer metal chamber 4 is arranged, also arranged as two shell-like half parts. Finally, the measuring circuitry box 6 with its lid 20 is shown to be assembled with one of the outer metal chamber 4 half parts.

Fig. 3b corresponds to fig. 3a, but as indicated with dotted lines, the interior layer of electromagnetic wave absorber material 8 may not necessarily enclose the complete inner transfer pipeline element 10, but may be only partially enclosing. For example, the layer may be restricted to a zone near the vital measuring parts, i.e. enclosing the preferably circular polarized antennas 14 and the parts of the inner transfer pipeline element 10 in the vicinity of the preferably circular polarized antennas. Other manners of arranging the interior layer of electromagnetic wave absorber material 8 may be possible, e.g. including arranging the layer with varying thickness, e.g. in accordance with specific and/or local needs for absorbing electromagnetic waves.

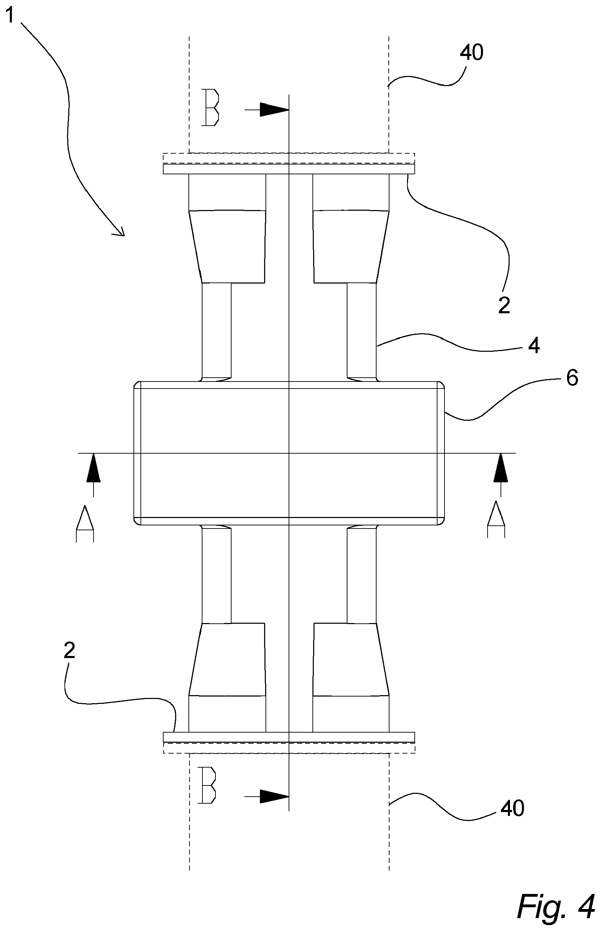

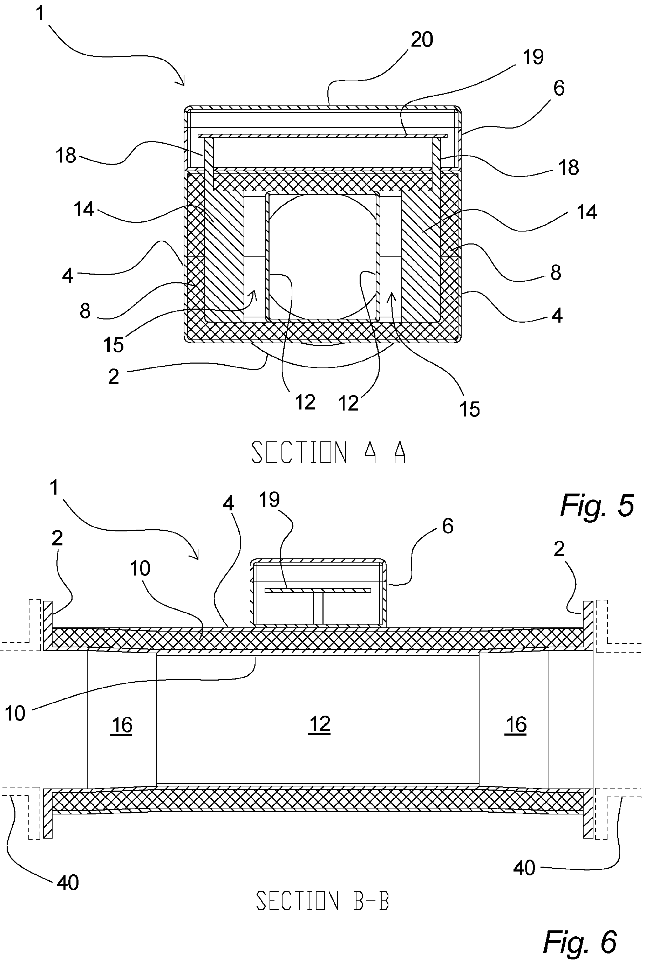

Fig. 4 shows the device of fig. 1 seen from above, indicating sectional lines A-A and B-B for sectional views as shown in fig. 5 and 6, respectively. Furthermore, it is indicated with dotted lines that the device 1 is intended for being part of a pipeline system, e.g. connected to a pipeline 40 at each end for conducting a substance.

In fig. 5 is shown a sectional view of the device 1 along the line A-A as indicated in fig. 4. Thus, the two opposed wall segments 12 are shown arranged in the interior of the device in parallel planes. Further, behind each of these two opposed wall segments 12 are shown the preferably circular polarized antennas 14, separated by a distance 15 as previously mentioned. This distance 15 thus arranged corresponds to a space, which may serve as a matching parameter, e.g. in connection with an impedance matching of the antenna arrangement and/or the measuring arrangement in general. Fig. 5 further shows the interior layer of electromagnetic wave absorber material 8 positioned inside the outer metal chamber 4 and substantially or at least partly surrounding the two preferably circular polarized antennas 14, the opposed wall segments 12 and the upper and lower walls of the inner transfer pipeline element 10. Further, the electric circuit board 19 or the like is shown arranged in the measuring circuitry box 6 for e.g. supporting electric and electronic measuring equipment, and with connections 18 to the circular polarized antennas 14.

Fig. 6 shows correspondingly a sectional view of the device along the line B-B as indicated in fig. 4. Here, it is further indicated that the inner transfer pipeline element 10 comprises the transition parts 16, which from the e.g. rectangular pipe part with the opposed wall segments 12 lead to the connection flanges 2. As indicated, the device 1 can here be connected to a pipeline 40 at each end for conducting a substance. The transition parts 16 serve for leading from the e.g. rectangular part of the inner transfer pipeline element 10 to the e.g. circular flange connection 2 (as can be seen in e.g. fig. 5) and further on to the pipeline 40. For example, the transition part 16 can be designed to facilitate an efficient and/or suitable substance flow. Furthermore, in this connection it is noted that the e.g. rectangular part of the inner transfer pipeline element in a particular embodiment may be configured with the same inner cross section area as the pipeline 40 itself. Also the transition part 16 may be designed in such a manner that it at any transverse section will have the same inner cross section area as the pipeline 40 itself, but it will be apparent to the skilled person that other configurations and variations are possible.

The operation of the measuring device according to an embodiment of the invention will be explained in the following.

A substance with various temperature, pressure and flow velocity will be flowing in the pipeline 40 passing the inner transfer pipeline element of the device 1.

A high frequency signal from a transmitting circuitry placed e.g. in the measuring circuitry box 6 is applied to one of the two antennas 14, e.g. the preferably circular polarized antennas that serve as the transmitting antenna in the measuring chamber.

An electromagnetic wave is propagating from the transmitting antenna towards the planar surface of the opposite of the opposed two wall segments 12 in the e.g. rectangular inner transfer pipeline element 10. Emission from the transmitting antenna in all other directions is attenuated by the electromagnetic wave absorber material of the interior layer 8 in the measuring chamber in order to avoid interfering reflections.

The electromagnetic wave is passing through the pipe material as well as the substance without changing the wave phase line orthogonal to the direction of propagation.

Due to the electromagnetic wave absorber material in the measuring chamber the out coming wave from the substance propagate directly to the one of the two antennas 14, e.g. preferably circular polarized antennas that serve as a receiving antenna without causing interfering reflections.

The signal from the receiving antenna is applied to receiver circuitry, e.g. positioned in the measuring circuitry box 6 that compares the incoming signal with a conducted reference signal from the transmitter circuitry in order to measure the change of amplitude and phase to be used for calculating the change of the specific material in the substance.

The electronic circuitry furthermore contains processing functionalities for computing and data interface communication to external sensors and for remote monitoring and control as it will be exemplified further below.

### Example 1

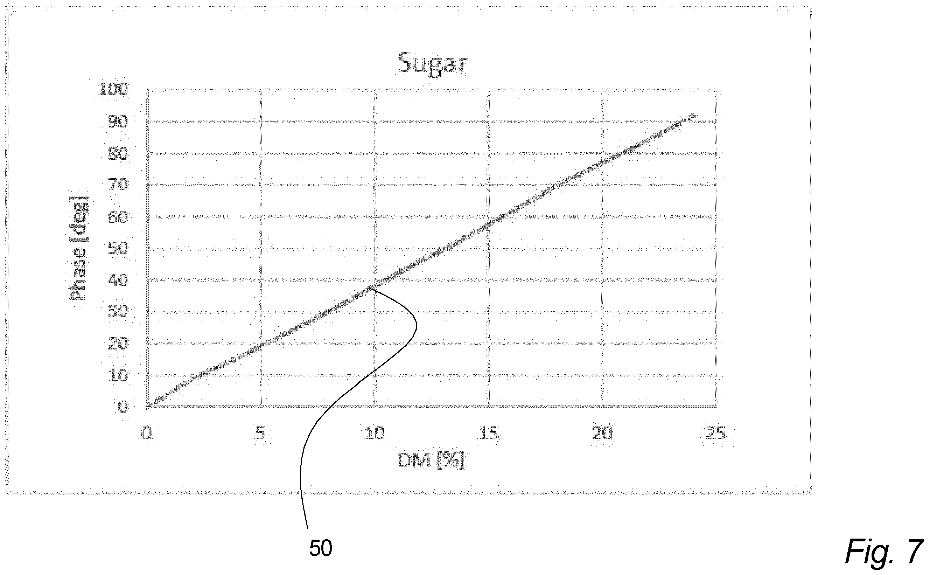

In fig. 7 is shown a typical measurement result showing the relation between the change of phase of the electromagnetic wave and the dry matter content (DM) of the substance conducted in the pipeline 40.

The substance being conducted here is sugar dissolved in a liquid, in this example water, which substance is being conducted in a pipeline having an inner diameter of 60 mm. The substance has been measured with a dry matter content in varying concentrations from 0 % to app. 24 %.
Other particulars relevant for this example are:
Electromagnetic wave frequency: 2.457 GHz
Temperature: 22° C

As it appears from fig. 7, the dry matter (DM) content can by the invention be determined in a linear relation 50 to the phase change of the received electromagnetic wave as compared to the transmitted electromagnetic wave. It is noted that initial calibration and possibly regular recalibrations are required, e. g. by propagating an electromagnetic wave through a flowing substance having a known dry matter (DM) content, for example 0 %.

### Example 2

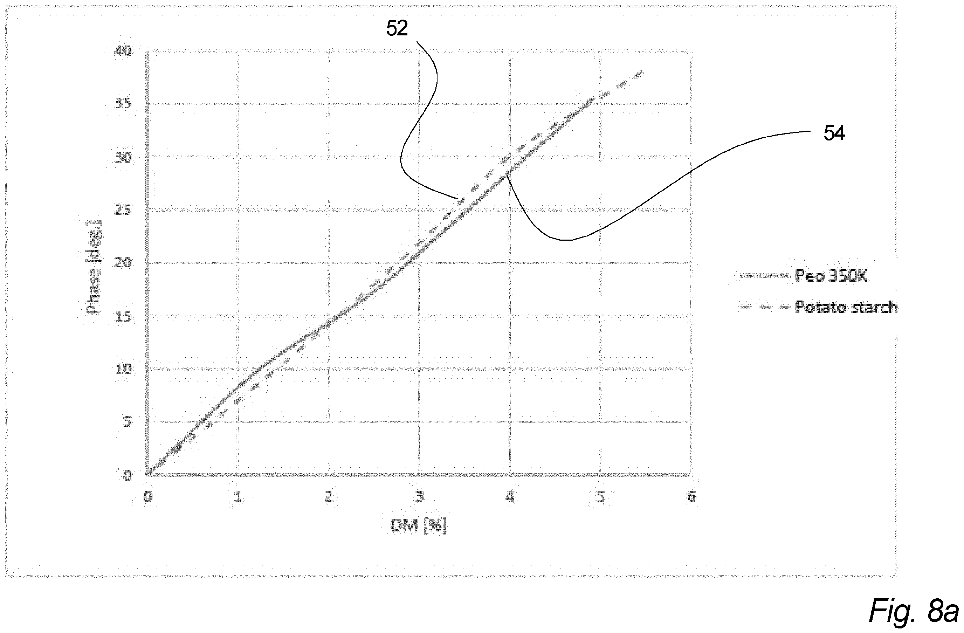

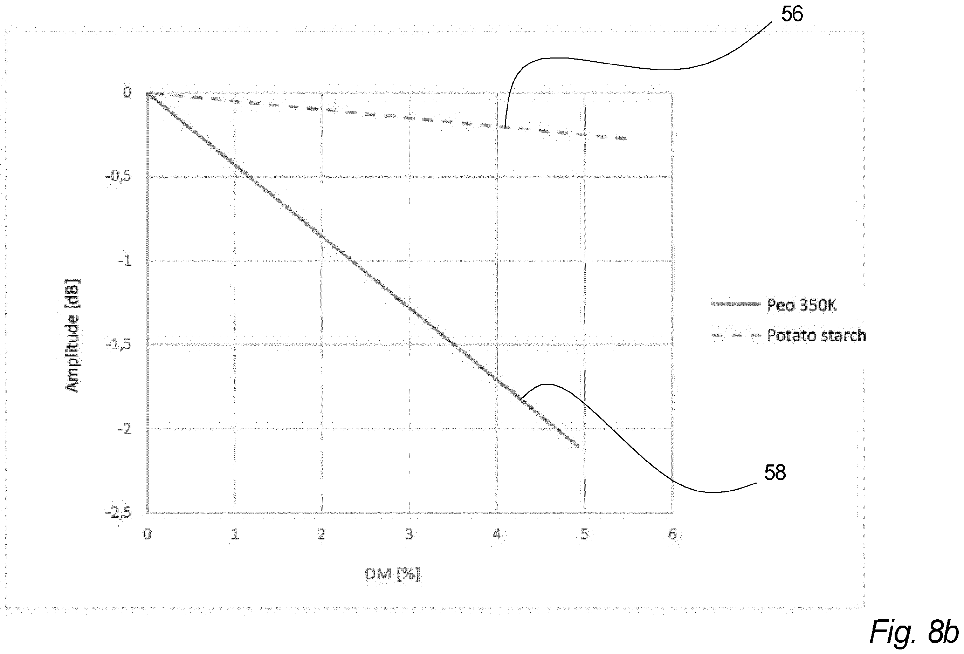

In fig 8a and fig. 8b a further typical measurement example is shown, involving measurements of change of phase as well as change of amplitude (shown as change of amplitude in dB) and where the change of amplitude of the electromagnetic wave is relevant for determining the dry matter content of the substance.

Here, the substances involved are potato starch and PEO 350000 (PEO 350K), which are substances with different material properties.

As shown in fig. 8a, the phase change as a function of the dry matter content in e.g. a liquid will be essentially the same for the two substances, cf. curve 52 showing the dry matter content in relation to phase change for potato starch and curve 54 showing the dry matter content in relation to phase change for PEO 350K. Thus, in case the two substances are mixed, measurements of the phase chance as a function of the (total) dry matter content will show the same slope and the rate of mixture cannot be determined.

However, the two different substances will effect very different results as regards the dampening of the amplitude as a function of the dry matter content, which is demonstrated in fig. 8b. Here, the curve 56 shows the dry matter content in relation to dampening for potato starch and the curve 58 shows the dry matter content in relation to dampening for PEO 350K. As clearly shown, the linear characteristics for the two substances are clearly distinguished from each other and based on this, the e.g. ratio of the mixture of substances can be determined.

In practice, the (total) dry matter content may be determined by a phase change measurement and subsequently, the dampening of the amplitude may be measured, which serves as basis for calculating the ratio of the mixture.

Such a method of determining the ratio of a mixture, using an apparatus according to an embodiment of the invention, may be utilized for example to control the ratio of mixture of different substances in a process, e.g. by providing feedback to feeding apparatus, etc., based on the measured and calculated results.

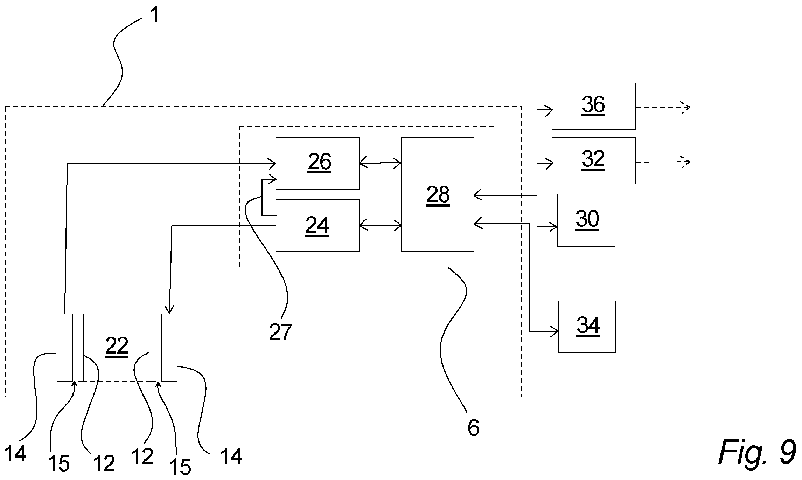

A schematic illustration of an embodiment of a device 1 according to the invention is shown in fig. 9, wherein electronic measuring and processing components are indicated.

Thus, a measuring chamber with a flowing substance 22 is sketched having the two opposed wall segments 12, each with an antenna 14, which preferably is a circular polarized antenna, and with a distance 15 between each opposed wall segment 12 and each preferably circular polarized antenna 14 as previously mentioned. Further, high frequency transmitting circuitry 24 is shown, which feeds the transmitting antenna. The signal received by the other antenna, i.e. the receiving antenna, is lead to a high frequency receiving circuitry 26. The high frequency receiving circuitry 26 may further receive a reference signal input 27 from the high frequency transmitting circuitry 24 in order to determine the change in phase and/or amplitude. Both the high frequency transmitting circuitry 24 and the high frequency receiving circuitry 26 are connected to e.g. a processing system 28 for e.g. calculating the change of the specific material in the substance. It is noted as a possibility that as indicated in fig. 9 the high frequency transmitting circuitry 24 as well as the high frequency receiving circuitry 26 may receive signals from the processing system 28, e.g. in connection with calibration, adjustments, etc. and that thus the communication between the processing system 28 and each of the high frequency transmitting 24 and receiving circuitry 26 may be bidirectional.

The processing system 28 may further be connected to e.g. a data interface communication unit 32, a monitoring and/or control unit 36, or the like for remote monitoring and control and other suitable functionalities. Also, a display 30 may be arranged, if desired, for direct visualization of the measured and/or calculated result. It is a further possibility, as indicated in fig. 9, that the processing system 28 may be connected to the e.g. data interface communication unit 32, the monitoring and/or control unit 36 and/or the display 30 by bidirectional communication means and may thus receive input signals from one or more of these units as well.

Even further, the processing system 28 may be connected to one or more external sensors 34, e.g. for measuring temperature, pressure, velocity of the substance 22, which measurements may be used when performing the calculations concerning the specific material in the substance, e.g. the changes of the specific material. The processing system 28 may as shown in fig. 1 transmit signals to such external sensors 34, which may be of relevance in connection with e.g. calibration, etc. of the system.

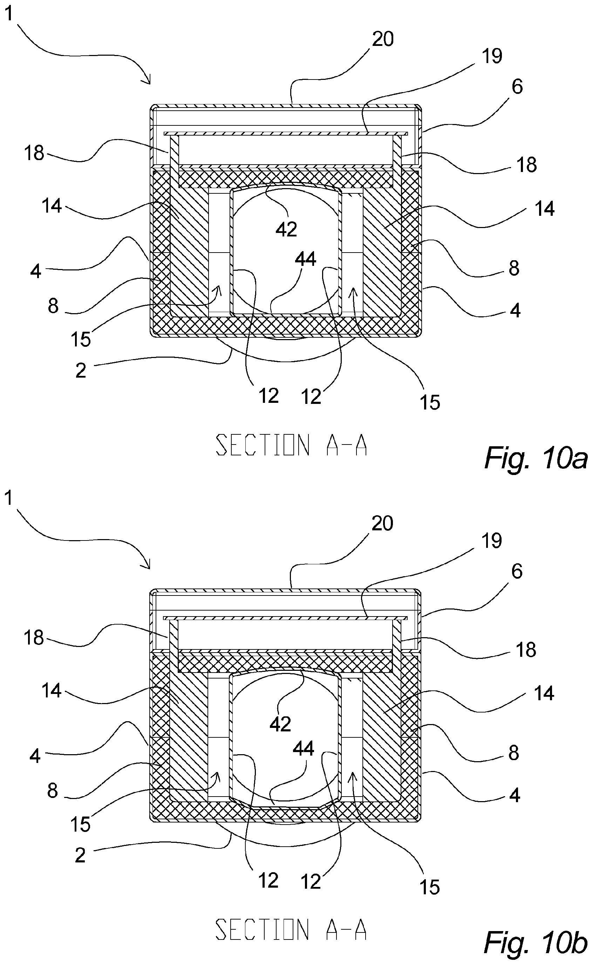

Figs. 10a and 10b show sectional views of the device 1 as shown in fig. 5, wherein further modifications are indicated as regards the walls of the measuring chamber, that is provided by the inner transfer pipeline element 10, in particular the opposed wall segments 12. As shown in fig. 10a, the upper wall segment 42 need not be a linear element, but may as shown be curved, e.g. in the shape of a circular arc or a variation hereof. Further, it is noted that the upper wall segment 42 may curve upwards as shown in fig. 10a or that it may curve downwards, if suitable. Thus, it will be understood that the inner transfer pipeline element 10 may not be a rectangular pipe or the like. As shown in fig. 10a, it is indicated that the electromagnetic wave absorber material 8 above the upper wall segment 42 may be modified correspondingly, while still being able to perform the function of facilitating the desired planar electromagnetic wave passage in the measuring chamber. It is further noted in this respect that layers of electromagnetic wave absorber material 8 may be modified elsewhere as compared to the example shown in e.g. fig. 5 and fig. 10a, for example in order to accommodate e.g. part of components, in order to minimize the required amount of electromagnetic wave absorber material, etc. without adversely affecting the functioning of the device according to the invention.

Fig. 10b show a similar example, where the upper wall segment 42 is curved upwards as shown in fig. 10a, and where furthermore the lower wall segment 44 is designed in a non-linear fashion, e.g. with a form being constructed by connecting linear parts. It will be apparent that other forms may be used as well and that also here the layer of electromagnetic wave absorber material 8 has been modified correspondingly.

The electromagnetic wave transmitting means and receiving means, e.g. the high frequency transmitting circuitry 24 and the high frequency receiving circuitry 26 may be designed for operating at frequencies above 100 MHz. In a preferred form, the frequency range may be in the interval from 100 MHz to 50 GHz, in a more preferred form the frequency range may be in the interval from 300 MHz to 10 GHz, in another preferred form the frequency range may be in the interval from 300 MHz to 1 GHz.

In the above description, various embodiments of the invention have been described with reference to the drawings, but it is apparent for a person skilled within the art that the invention can be carried out in an infinite number of ways, using e.g. the examples and configurations as disclosed in the description in various combinations, and within a wide range of variations within the scope of the appended claims.

### List of reference numbers

- 1: Device
- 2: Connection flange
- 4: Outer metal chamber
- 6: Measuring circuitry box
- 8: Interior layer of electromagnetic wave absorber material
- 10: Inner transfer pipeline element
- 12: Opposed wall segment
- 14: Antenna
- 15: Distance between an opposed wall segment and a circular polarized antenna
- 16: Transition part
- 18: Electrical connections for antenna
- 19: Electric circuit board
- 20: Lid for measuring circuitry box
- 22: Substance
- 24: High frequency transmitting circuitry
- 26: High frequency receiving circuitry
- 27: Reference input
- 28: Processing system
- 30: Display
- 32: Data interface communication
- 34: External sensor(s)
- 36: Monitoring and/or control
- 40: Pipeline
- 42: Upper wall segment in measuring chamber
- 44: Lower wall segment in measuring chamber
- 50: Curve - Dry matter in relation to phase change for sugar
- 52: Curve - Dry matter in relation to phase change for potato starch
- 54: Curve - Dry matter in relation to phase change for PEO 350K
- 56: Curve - Dry matter in relation to dampening for potato starch
- 58: Curve - Dry matter in relation to dampening for PEO 350K

## Claims

1. A device (1) for determining at least one substance parameter of a substance (22), said substance flowing in a pipeline, wherein said device comprises electromagnetic wave transmitting means and receiving means for transmitting and receiving, respectively, electromagnetic waves through said substance, characterized i n that said device (1) comprises an outer metal chamber (4), which is lined at least partly with an interior layer of electromagnetic wave absorber material (8), and an inner transfer pipeline element (10) configured with at least two opposed wall segments (12) that are essentially parallel with each other, wherein said electromagnetic wave transmitting means and receiving means comprises two antennas (14), each positioned at a respective one of said at least two opposed wall segments (12), such that electromagnetic waves pass through said substance (22) flowing via said inner transfer pipeline element (10) in a planar way.

2. The device according to claim 1, wherein said antennas (14) are circular polarized antennas.

3. The device according to claim 1 or 2, wherein said two antennas (14), each positioned at a respective one of said at least two opposed wall segments (12), are positioned behind each one of said at least two opposed wall segments (12).

4. The device according to claim 3, wherein a distance (15) is arranged between each of said two opposed wall segments (12) and the respective antennas (14), said distance (15) representing a matching parameter.

5. The device according to any one of claims 1 to 4, wherein said inner transfer pipeline element (10) is configured as an essentially rectangular pipeline element.

6. The device according to any one of claims 1 to 5, wherein said inner transfer pipeline element (10) is configured with connection means, e.g. connection flanges (2), at the ends for establishing connection to the pipeline.

7. The device according to any one of claims 1 to 6, wherein said inner transfer pipeline element (10) is configured with an inner cross sectional area that essentially is the same as the inner cross sectional area of the pipeline.

8. The device according to any one of claims 1 to 7, wherein said antennas (14), e.g. circular polarized antennas, are patch antennas.

9. The device according to any one of claims 1 to 8, wherein said device comprises high frequency transmitting circuitry (24) and high frequency receiving circuitry (26) connected to said antennas (14), e.g. said circular polarized antennas.

10. The device according to any one of claims 1 to 9, wherein said device comprises a processing system (28) for providing determination of a specific material in the substance (22), based on change in amplitude and/or phase for the electromagnetic wave propagated through the substance (22) from one of said two antennas (14) to the other.

11. The device according to any one of claims 1 to 10, wherein said device is configured for transmitting and receiving by said electromagnetic wave transmitting means and receiving means, respectively, electromagnetic waves at frequencies above 100 MHz, in a preferred form in a frequency interval from 100 MHz to 50 GHz, in a more preferred form in a frequency interval from 300 MHz to 10 GHz and in another preferred form in a frequency interval from 300 MHz to 1 GHz.

12. A method of determining at least one substance parameter of a substance (22), said substance flowing in a pipeline, wherein said method comprises providing electromagnetic wave transmitting means and receiving means for transmitting and receiving, respectively, electromagnetic waves through said substance, characterized i n that said method comprises
- providing a measurement device (1) comprising an outer metal chamber (4), which is lined at least partly with an interior layer of electromagnetic wave absorber material (8), and an inner transfer pipeline element (10) configured with at least two opposed wall segments (12) that are essentially parallel with each other, wherein said electromagnetic wave transmitting means and receiving means comprises two antennas (14), each positioned at a respective one of said at least two opposed wall segments (12),
- propagating electromagnetic waves from said electromagnetic wave transmitting means to said electromagnetic wave receiving means passing through said substance (22) in a planar way, and
- determining said at least one substance parameter based on change in amplitude and/or phase for the electromagnetic wave propagated through the substance (22).

13. The method according to claim 12, whereby said method comprises performing at least one initial calibration measurement.

14. The method according to claim 12 or 13, utilizing a device according to any one of claims 1 to 11.

15. The method according to claim 12, 13 or 14, whereby measurement data are provided through e.g. a data interface for remote use, for example for an automation or monitoring process.
